# DEMANDE DE BREVET EUROPEEN

(11) **EP 0 928 093 A1**
(43) Date de publication de la demande: **07.07.1999**
(21) Numéro de dépôt: 98204433.1
(22) Date de dépôt: 24.12.1998
(51) Int. Cl.: H04M 1/02, H04M 1/23, H04M 1/66

(54) **Combiné de téléphonie mobile sécurisé**

(30) Priorité: 31.12.1997 FR 9716761
(71) Demandeur: Koninklijke Philips Electronics N.V., 5621 BA Eindhoven (NL)
(72) Inventeur: Cachard, Vincent, Société Civile S.P.I.D., 75008 Paris (FR)
(74) Mandataire: Pyronnet, Jacques

(57) **Abrégé**

Le combiné comporte un dispositif d'affichage (4) et un clavier. Selon l'invention, il comporte des moyens électriques (33B, 33H, 41) et des moyens mécaniques (29D, 29G, 31D, 31G, 37D, 37G), permettant de rendre solidaires ou séparables une partie principale (32), et un sous-ensemble (28) qui comporte d'un côté le clavier (8) et de l'autre un volet. Les moyens mécaniques et électriques permettent trois positions mutuelles : une première position dite de clavier-en-place où le combiné est en état opérationnel complet ; une deuxième position dite de volet-en-place qui n'autorise que des appels entrants et une troisième position dite de séparation où la partie principale du combiné est mise hors fonctionnement.

Application aux téléphone mobiles.

## Description

La présente invention concerne un combiné de téléphone mobile comportant, entre autres éléments nécessaires pour le fonctionnement d'un tel combiné, un dispositif d'affichage et un clavier.

L'invention s'applique d'une façon générale à tout type de téléphone portable, ce qui englobe aussi bien les téléphones sans fil, dits aussi résidentiels, que les téléphones cellulaires, ces dernier, porteurs d'une carte SIM ou micro SIM étant plus particulièrement visés par l'invention.

En peu de temps les téléphones portables deviennent de plus en plus sophistiqués, intégrant un nombre de fonctions toujours croissant, ce qui les rend plus précieux. A l'inverse, leur utilisation est telle qu'ils sont, plus que d'autres appareils, soumis à des contraintes mécaniques, notamment, assez sévères, avec des risques de dégradations et d'utilisation frauduleuse, pouvant être accompagnée ou non de vol. Il est par suite nécessaire de sécuriser ces appareils pour les protéger aussi bien mécaniquement, pendant leurs transport, qu'électroniquement lorsqu'ils sont laissés quelque part en cas de non utilisation.

Dans l'art connu, on sait résoudre partiellement le problème technique précité. Il est connu par exemple, du brevet DE-A 43 21 899, de rendre extractible, d'un téléphone portable, un sous-ensemble constitué par une carte électronique munie d'un clavier et d'un dispositif d'affichage. Lorsque ce sous-ensemble est retiré du combiné, ce dernier est rendu inutilisable.

Le principal but de l'invention est de rendre séparable d'un combiné de téléphone portable un sous-ensemble qui combine les fonctions de clavier ou de volet pour ce combiné.

Ce but est atteint et les inconvénients de l'art antérieur sont atténués grâce au fait que le combiné de téléphone mobile défini au premier paragraphe est remarquable en ce qu'il comporte des moyens électriques et des moyens mécaniques permettant de rendre solidaires ou séparables une partie principale du combiné et un sous-ensemble complémentaire qui comporte sur une première face ledit clavier, sur la face opposée un volet, lesdits moyens mécaniques et lesdits moyens électriques coopérant entre la partie principale et le sous-ensemble pour permettre au moins trois positions mutuelles correspondant à trois états électromécaniques, une première position dite de clavier-en-place, dans laquelle le combiné est dans son état opérationnel complet, une deuxième position dite de volet-en-place qui n'autorise que des appels entrants et une troisième position dite de séparation dans laquelle ladite partie principale du combiné est mise hors fonctionnement.

Lorsque le volet est en place (deuxième position) le combiné peut être transporté et manipulé sans qu'il soit nécessaire de le munir d'un étui, le clavier et éventuellement aussi le dispositif d'affichage étant mécaniquement protégés. Dans cette position, les contacts électriques entre le sous-ensemble et la partie principale sont tels qu'un appel entrant reste possible. Par contre, lorsque le sous-ensemble est enlevé du combiné, les déconnexions électriques sont telles que la partie principale restante est mise hors service et devient alors sans intérêt pour une personne non autorisée qui voudrait utiliser le combiné.

Un mode de réalisation préféré du combiné selon l'invention est remarquable en ce que **lesdits moyens mécaniques** consistent en deux rainures latérales (respectivement deux nervures) sur ledit sous-ensemble coopérant avec deux nervures latérales (respectivement deux rainures) sur ladite partie principale et un dispositif de verrouillage en butée et lesdits moyens électriques consistent en plusieurs plots de connexion disposés en regard sur le sous-ensemble et dans ladite partie principale qui entrent en contact élastique lors de l'arrivée en butée du sous-ensemble contre la partie principale, en première position clavier-en-place ou en deuxième position volet-en-place.

Dans ce mode de réalisation, le dispositif d'affichage est toujours visible, sur la partie principale du combiné, quelle que soit la position, par rapport à lui, du sous-ensemble, et ne permet pas la miniaturisation de ce dernier.

Un deuxième mode de réalisation préféré de l'invention est remarquable en ce que lesdits moyens mécaniques consistent en quatre tourillons disposés aux quatre coins dudit sous-ensemble, et, sur la partie principale, en deux gorges destinées à recevoir deux par deux lesdits tourillons par deux accès hauts prévus à cet effet à une de leurs extrémités et comportant deux butées pour lesdits tourillons à leur autre extrémité et que lesdits moyens électriques consistent, dans la partie principale, en plusieurs plots de connexion disposés entre lesdites butées et, sur le sous-ensemble, en des pistes conductrices correspondantes disposées autour des deux bords arrondis latétaux qui relient deux par deux lesdits tourillons parallèlement à leur axe de rotation.

Ce mode de réalisation offre un avantage supplémentaire, par rapport au précédent, qui consiste à pouvoir faire pivoter le sous-ensemble, à partir de la première position ou de la deuxième position, autour de ses deux tourillons qui sont appuyés contre lesdites butées tout en conservant les connexions électriques nécessaires au fonctionnement de l'appareil.

Un troisième mode de réalisation avantageux de l'invention déduit du deuxième mode précité, consiste en ce que, le dispositif d'affichage étant situé en position volet-en-place, derrière le sous-ensemble qui le cache et le protège, dans cette deuxième position, ladite partie principale comporte un bord incliné reliant lesdites butées pour supporter selon un angle ledit sous-ensemble dans ladite première position de clavier-en-place qui est obtenue par pivotement dudit sous-ensemble à partir de la deuxième position de volet-en-place.

Ce mode de réalisation permet d'avoir un combiné plus compact du fait d'en diminuer la hauteur d'une longueur au moins égale à la hauteur du dispositif d'affichage habituel.

Un quatrième mode de réalisation avantageux de l'invention déduit du troisième mode précité est remarquable en ce que lesdites butées pour les tourillons sont constituées chacune par un étranglement desdites gorges qui débouche, chacun, sur un deuxième accès bas pour lesdits tourillons.

Il devient ainsi possible d'introduire ou d'extraire le sous-ensemble dans la partie principale du combiné par le haut ou par le bas, indifféremment. Pour tous les deuxième, troisième et quatrième modes de réalisation indiqués ci-dessus il est envisageable de rendre dissymétriques les parties de coulissement mutuelles de la partie principale et du sous-ensemble afin de créer un effet dit de détrompeur empêchant d'introduire le sous-ensemble selon une orientation fautive, à raison de deux orientations fautives parmi quatre possibles.

La description qui suit en regard des dessins annexés, le tout donné à titre d'exemple non limitatif, fera bien comprendre comment l'invention peut être réalisée.

La figure 1 représente : en A, vu en perspective, un premier mode de réalisation de la partie principale du combiné selon l'invention ; en B, vu en perspective par sa face avant et en C vu de dos par son arrière, un sous-ensemble qui convient pour le premier mode de réalisation ; en D une section du dispositif de verrouillage pour le premier mode de réalisation.

La figure 2 représente : en A, vu de face un deuxième mode de réalisation de la partie principale du combiné selon l'invention ; en B, vu de face et en C vu de dos, un sous-ensemble qui convient pour le deuxième mode de réalisation.

La figure 3 représente, vu en perspective, un troisième mode de réalisation de la partie principale du combiné selon l'invention.

La figure 4 représente, vu en perspective, un quatrième mode de réalisation de la partie principale du combiné selon l'invention.

La figure 5 est : en A une vue en perspective d'un sous-ensemble qui convient pour les deuxième, troisième et quatrième modes de l'invention ; en B, une vue de côté éclatée du sous-ensemble de la figure 5 A.

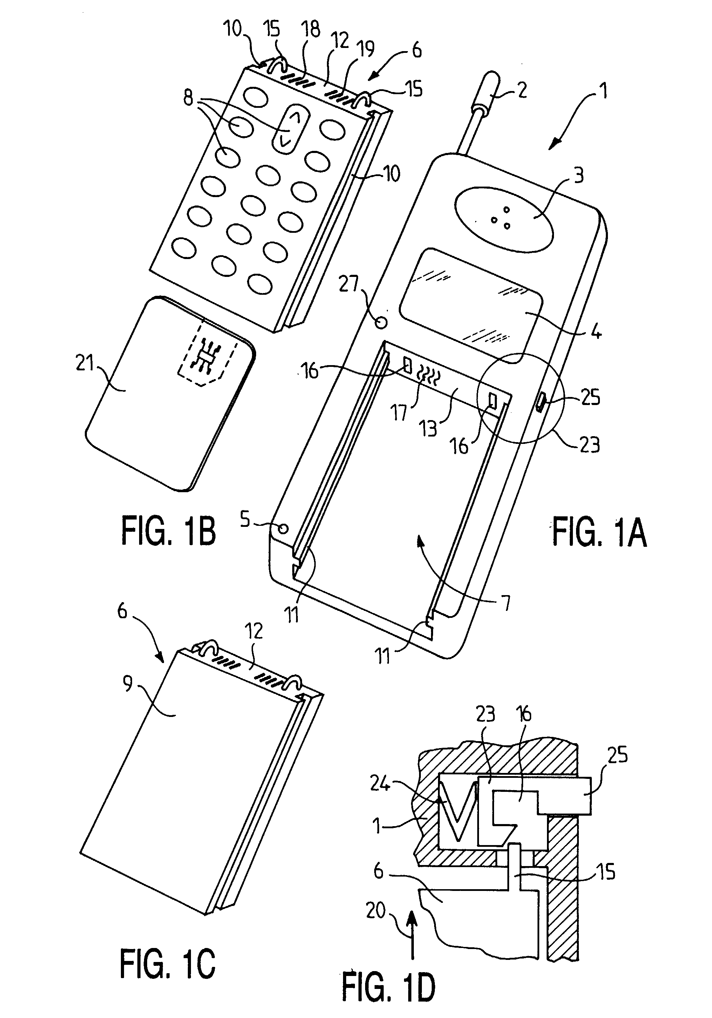

A la figure 1 A, la partie principale 1 d'un radiotéléphone comporte de façon connue une antenne 2, un écouteur 3, un dispositif d'affichage (afficheur) 4 et un microphone 5. Un sous-ensemble complémentaire 6 est aussi prévu pour être inséré dans un logement 7. Ce sous-ensemble, démontable, représenté aux figures 1B et 1C, comporte sur une première face un clavier 8 (figure 1B) et, sur la face opposée, un volet 9 (figure 1C) qui peut, avantageusement, comporter la marque du constructeur de l'appareil. Pour sa solidarisation avec la partie principale 1, le sous-ensemble 6 comporte, à ses bords latéraux des rainures identiques 10 dans lesquelles s'engagent des nervures identiques 11 dans le logement 7 de la partie principale. On peut prévoir aussi que les rainures soient pratiquées dans la partie principale et les nervures dans le sous-ensemble. Le coulissement entre les parties 1 et 6 peut s'effectuer pour deux orientations du sous-ensemble 6, c'est-à-dire soit avec le clavier apparent, qui aboutit à la position dite clavier-en-place, soit avec le volet apparent, qui aboutit à la position dite volet-en-place. Ce coulissement mutuel se termine lorsque le bord supérieur 12 vient en butée contre un bord supérieur 13 du logement 7. Des moyens de verrouillage, représentés plus en détail à la figure 1D sont prévus pour maintenir assemblés en butée les éléments 1 et 6. Ces moyens de verrouillage sont par exemple constitués par des anneaux 15 disposés symétriquement sur le bord 13, qui pénètrent dans des ouvertures 16 symétriques sur le bord 13. Dans cette position un crochet, logé dans une ouverture 16, retient le sous-ensemble par l'un des anneaux 15, et une connexion électrique est réalisée entre un premier lot de plots de connexion constitués par des contacts électriques élastiques 17, sur un côté du bord 13 et un lot correspondant 18, respectivement 19, sur l'un ou l'autre côté du bord supérieur 12 du sous-ensemble 6. On notera que les connexions électriques réalisées entre les éléments 1 et 6 sont identiques selon que c'est le lot 18 ou le lot 19 qui est connecté au lot 17, ce qui implique un appariement symétrique des contacts du lot 18 avec ceux du lot 19 à l'intérieur du sous-ensemble 6. Lorsque le radiotéléphone décrit est du type cellulaire GSM, il comporte une carte SIM ou micro SIM. De préférence cette carte, référencée 21 à la figure 1B, s'insère à travers une fente, non visible sur la figure, dans le sous-ensemble 6 qui comporte à cet effet un lecteur de carte électronique. Cette fente s'étend, entre les rainures 10, sensiblement à la même cote que ces dernières.

La figure 1D est une section agrandie de la partie 23 de la figure 1A où s'effectue le verrouillage de l'élément 6 contre l'élément 1. Dans la position de la figure 1D les contacts 18 ou 19 du sous-ensemble 6 commencent à toucher les plots de contacts élastiques 17 (non visible sur la figure 1D). Lorsqu'une force dans le sens de la flèche 20 est exercée contre le sous-ensemble 6, l'un des anneaux 15 repousse un crochet 23, dans l'ouverture 16, contre l'action d'un ressort 24. A la fin du mouvement le crochet 23 revient en place en emprisonnant l'anneau 15, le système étant ainsi verrouillé. Pour la libération du sous-ensemble 6 il suffit d'appuyer sur un bouton latéral 25 qui repousse le crochet 23 et le sous-ensemble 6 finit de se désolidariser sous l'effet des plots élastiques 17 qui le repoussent jusqu'à la position représentée à la figure 1D. On notera, pour le mode de réalisation de la figure 1, que les éléments 10, 11, 15, 23, 24, 25 constituent des moyens mécaniques de solidarisation et de séparation du sous-ensemble 6 contre la partie principale 1, alors que les éléments 17, 18 et 19 constituent des moyens électriques entre ces éléments 1 et 6.

On notera à ce sujet que lorsque les éléments 1 et 6 sont solidaires, les connexions électriques entre eux sont optimales, étant identiques, que l'on soit en position volet-en-place ou clavier-en-place. Dans le premier cas, seul un appel entrant est possible, moyennant d'appuyer sur une touche de prise de ligne 27 prévue sur la partie principale 1. Dans la position clavier-en-place, l'appareil fonctionne normalement, comme n'importe quel autre radiotéléphone. Dans une troisième position, dite de séparation, les liaisons établies par les mises en contact du lot 17 avec l'un des lots 18 ou 19 sont conçues de façon telle que la partie principale 1 soit mise totalement hors service, c'est-à-dire à l'état d'arrêt, ne pouvant ni recevoir ni émettre aucun signal radio. Sur les figures 1A, 1B et 1C seuls 4 contacts électriques sont visibles ; ceci a été fait pour ne pas surcharger les dessins et le nombre de contacts nécessaires est plutôt de l'ordre d'une dizaine, surtout lorsqu'une carte SIM ou micro SIM est à prévoir dans le sous-ensemble 6. En effet il faut au moins 2 et de préférence 3 contacts pour relier électriquement le clavier et jusqu'à 6 contacts pour relier la carte SIM.

Ce qui est indiqué au paragraphe précédent relativement au nombre et à la fonctionnalité des liaisons électriques entre les éléments 1 et 6 reste vrai pour les deuxième, troisième et quatrième modes de réalisation décrits ci-dessous.

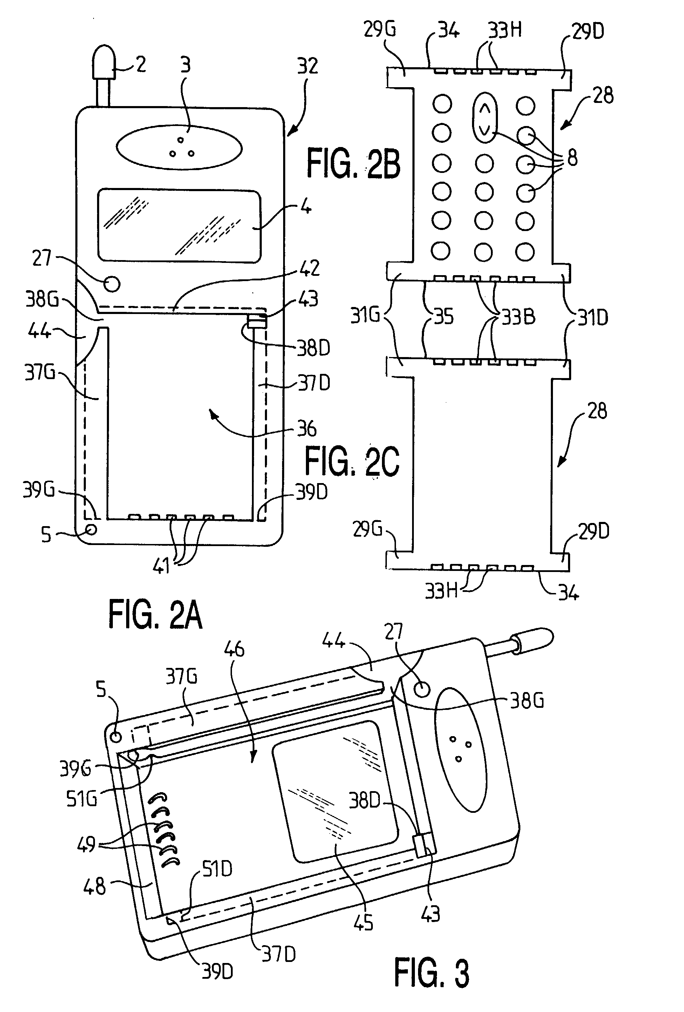

Pour le mode de réalisation de la figure 2 on retrouve des éléments identiques connus du radiotéléphone de la figure 1, tels l'antenne 2, l'écouteur 3, l'afficheur 4, le microphone 5 et la touche de prise de ligne 27. Par contre, les moyens essentiels de l'invention y sont un peu différents : le sous-ensemble 28, outre son clavier 8 qui reste classique, comporte à chacun de ses coins un tourillon. Ces tourillons sont, de préférence identiques dans le sens haut-bas et différents dans le sens droite-gauche, ce qui permet de distinguer deux tourillons droits 29D et 31D et deux tourillons gauches 29G et 31G. Ces tourillons diffèrent par leurs diamètres et/ou leur longueur, ce qui permet de créer avantageusement un effet de détrompeur lors de l'introduction du sous-ensemble 28 dans la partie principale 32. Par ailleurs, des pistes conductrices 33H et 33B sont prévues autour des bords supérieur 34 et inférieur 35, de préférence arrondis, du sous-ensemble. Ces pistes se correspondent deux à deux dans le sens haut-bas, étant électriquement connectées entre elles par paires à l'intérieur du sous-ensemble 28 et chaque contact commun relié à un organe électrique à l'intérieur de 28, en vue d'assurer chaque fois une fonctionnalité électrique nécessaire au fonctionnement de l'ensemble. Dans la partie principale 32 il est prévu un logement 36 pour y insérer le sous-ensemble 28. Dans les parois latérales du logement 36 sont pratiquées deux gorges ; l'une 37D disposée à droite est prévue pour recevoir le tourillon 29D et/ou 31D dont elle a les mêmes dimensions, soit une largeur égale au diamètre de ces tourillons et une profondeur égale à leur dimension latérale. Il en est de même pour les tourillons 29G et 31G associés à la gorge 37G. En outre, le logement 36 comporte à sa partie haute deux accès 38D et 38G pour les tourillons permettant d'introduire le sous-ensemble 28 dans le logement 36, soit par les tourillons 31 qui rentrent dans les gorges 37 en vue d'une insertion dite clavier-en-place, selon la même orientation que celle de la figure 2B, soit par les tourillons 29 qui rentrent, par les mêmes accès 38 dans les gorges 37 selon l'orientation représentée à la figure 2C. Dans ce mouvement, les deux premiers tourillons introduits arrivent contre des butées 39D et 39G en bout de gorge juste après que des contacts électriques se sont établis entre des plots élastiques 41 disposés entre les butées 39 et, soit les pistes 33B en position clavier-en-place, soit les pistes 33H en position volet-en-place. Pour achever le mouvement de mise en place, le sous-ensemble est repoussé à sa partie haute de façon que la deuxième paire de tourillons 29, respectivement 31, entre à son tour dans les accès 38. Pour assurer un verrouillage dans cette position finale, on peut prévoir de donner une légère concavité au bord haut 42 du logement 36, le sous-ensemble étant appliqué contre ce bord par les plots de contact élastiques comprimés 41. En outre on peut prévoir un verrouillage s'exerçant au niveau du tourillon par exemple droit qui se trouve en haut de gorge, ce verrouillage consistant en une porte à double battant 43 qui peut s'ouvrir puis se refermer élastiquement dans les deux sens sous la poussée d'un tourillon (tourillon droit en l'occurrence). Cette porte peut être réalisée en nylon, par exemple. De préférence, le deuxième accès (38G) est libre pour les tourillons gauches et une échancrure 44 est pratiquée à son niveau dans le bord latéral correspondant de la partie principale. Ceci permet un déverrouillage facile du sous-ensemble, en repoussant d'un doigt vers l'extérieur le tourillon qui s'étend dans le deuxième accès et dans l'échancrure 44.

Un troisième mode de réalisation est montré à la figure 3, plus ramassé que les deux modes décrits ci-dessus.

Ce troisième mode ressemble au deuxième mode de la figure 2, en ce sens qu'il utilise le même sous-ensemble représenté aux figures 2B et 2C. Par contre, la partie principale présente quelques différences : en premier lieu on notera que l'afficheur 45 ne se situe pas en haut du combiné mais au fond du logement 46 destiné à recevoir le sous-ensemble 28, ce qui permet de raccourcir le combiné de la hauteur de cet afficheur et aussi de lui attribuer une surface plus grande si désiré puisqu'on dispose alors d'une surface comparable à celle du clavier. Les accès aux gorges 37D et 37G peuvent être les mêmes qu'à la figure 2A. Par contre, à l'autre extrémité, on peut observer quelques différences : le bord 48 qui relie les butées 39D et 39G n'est plus droit mais incliné selon un angle de l'ordre de 50 à 60° par rapport à la position droite. D'autre part, les plots de connexion 49 qui pourraient encore être placés sur ce bord inférieur 48 du logement 46 sont, de préférence, placés juste en deçà, sur le fond du logement. Une autre particularité est que l'extrémité des gorges qui comportent les butées 39D et 39G comportent, juste en amont, un premier étranglement 51D, 51G conçu pour constituer un point dur pour le passage des tourillons juste avant leur arrivée en butée à l'extrémité des gorges.

Pour obtenir la deuxième position (volet-en-place) il faut opérer comme suit :
- engager les tourillons hauts, 29D et 29G dans les accès 38D et 38G,
- faire coulisser ces tourillons jusqu'en butée, au-delà de l'étranglement 51D, 51G,
- engager les tourillons bas 31D et 31G dans les accès 38D et 38G.

Si l'on veut obtenir la position clavier-en-place (dite première position), il faut partir de la deuxième position indiquée ci-dessus et faire pivoter le sous-ensemble en poussant le tourillon 31G jusqu'à ce que la face qui constitue le volet vienne se caler par sa partie haute contre le bord incliné 48, ce qui lui donne la même inclinaison que ce dernier. Cette position est favorable pour le microphone 5, même s'il est un peu plus éloigné de la bouche que pour les deux premier modes de réalisation décrits ci-dessus, car le sous-ensemble incliné renvoie alors une assez grande partie de la voix de l'abonné vers le microphone.

On pourrait envisager une troisième position pour la coopération mécanique et électrique de la partie principale avec le sous-ensemble, pour ce troisième mode, position qui consisterait à introduire en premier les tourillons 31D et 31G dans les gorges, mais cette position serait peu ergonomique. Pour cette raison on peut prévoir un deuxième effet dit de détrompage consistant à réaliser le tourillon 31G par exemple plus long que la profondeur de la gorge 37G.

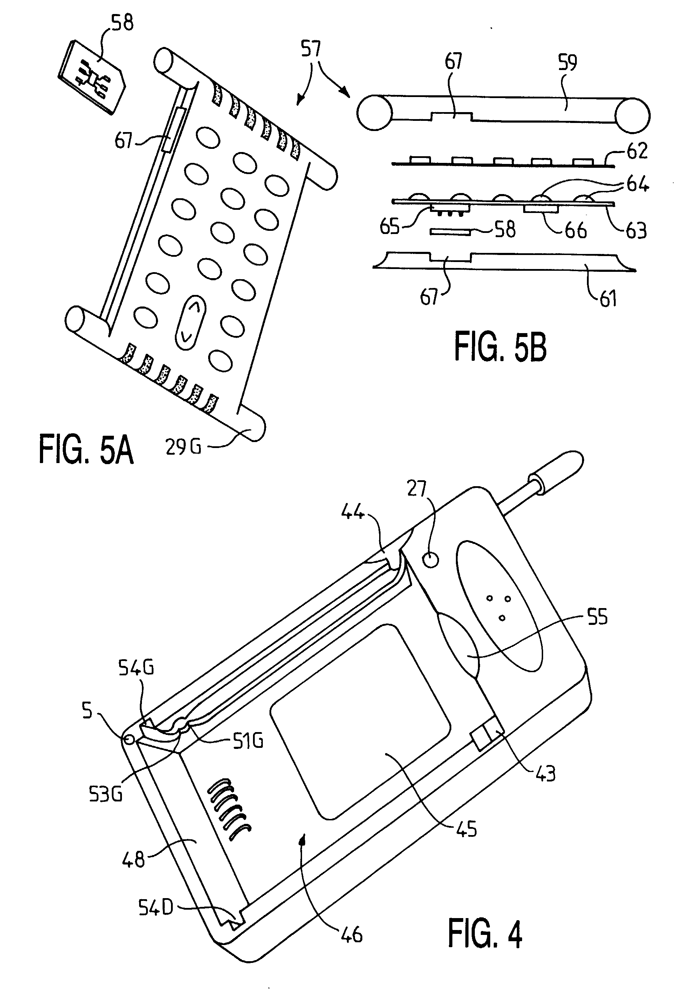

Le quatrième mode de réalisation de la figure 4 est assez proche du précédent, décrit ci-dessus en référence à la figure 3. Il en présente tous les éléments décrits avec la même fonction mais présente trois particularités supplémentaires. Les butées 39D et 39G sont remplacées chacune par un deuxième étranglement 53D (non visible) et 53G et ces étranglements débouchent chacun sur un deuxième accès bas pour les tourillons, 54D et 54G. De plus, une échancrure 55 est pratiquée dans le bord intérieur haut du logement 46. Il devient ainsi possible, lorsque le sous-ensemble est en place avec ses 4 tourillons dans les gorges et selon que le clavier est visible ou pas, de passer à la première position (clavier-en-place) soit en faisant coulisser vers le bas le sous-ensemble, par appui au niveau de l'échancrure 55, soit en le faisant basculer par action sur le tourillon 31G.

La figure 5 montre un sous-ensemble 57 qui convient pour le deuxième, troisième et quatrième mode de réalisation. Ce sous-ensemble est prévu pour recevoir une carte micro SIM 58. Le sous-ensemble est constitué de deux coques 59 et 61 obtenues de préférence par moulage par injection de styrène-acrylonitrile-butadiène (ABS). L'une des deux coques, par exemple la coque supérieure 59 qui comporte le clavier, comporte aussi les 4 tourillons d'angle. A l'intérieur du sous-ensemble se trouvent : une nappe souple des touches du clavier 62 ; un circuit imprimé souple 63 qui supporte les contacts 64 à sa partie supérieure et un lecteur de carte (micro) SIM 65 à sa partie inférieure qui peut aussi supporter des circuits intégrés tels que 66 ou d'autres composants. L'assemblage du sous-ensemble se fait de préférence par soudure par ultrasons des coques 59 et 61 qui contiennent les éléments 62 à 66. Une ouverture 67 est prévue pour le passage de la carte micro SIM 58.

Le combiné de radiotéléphone décrit ci-dessus présente l'avantage d'ête bien sécurisé : lorsque son utilisateur habituel ne souhaite pas s'en servir, il lui suffit d'emporter seulement le clavier, ce qui rend la partie principale restante inutilisable par une autre personne et dissuade aussi d'un vol éventuel de l'appareil. Dans le cas contraire et en dehors des périodes d'utilisation proprement dites, l'appareil est bien protégé, d'un point de vue mécanique, étant dans sa position volet-en-place.

Un autre avantage de l'invention est de pouvoir obtenir, à partir d'un seul produit de base que constitue la partie principale, toute une gamme de combinés qui se différencient par la forme ou la couleur de leur clavier ou même par des fonctionnalités étant donné que le matériel électronique (mémoires, microprocesseurs...) que contient le sous-ensemble peut aussi être varié, soit pour compléter les fonctions du radiotéléphone soit pour en ajouter d'autres telles que celles d'une calculatrice ou d'un organiseur personnel notamment.

## Revendications

1. Combiné de téléphone mobile comportant un dispositif d'affichage et un clavier, caractérisé en ce qu'il comporte des moyens électriques et des moyens mécaniques permettant de rendre solidaires ou séparables une partie principale du combiné et un sous-ensemble complémentaire qui comporte sur une première face ledit clavier, sur la face opposée un volet, lesdits moyens mécaniques et lesdits moyens électriques coopérant entre la partie principale et le sous-ensemble pour permettre au moins trois positions mutuelles correspondant à trois états électromécaniques, une première position dite de clavier-en-place, dans laquelle le combiné est dans son état opérationnel complet, une deuxième position dite de volet-en-place qui n'autorise que des appels entrants et une troisième position dite de séparation dans laquelle ladite partie principale du combiné est mise hors fonctionnement.

2. Combiné de téléphone mobile selon la revendication 1, caractérisé en ce que ledit sous-ensemble est conçu pour recevoir une carte SIM ou une carte micro SIM.

3. Combiné de téléphone mobile selon la revendication 1 ou 2, caractérisé en ce que lesdits moyens mécaniques consistent en deux rainures latérales (respectivement deux nervures) sur ledit sous-ensemble coopérant avec deux nervures latérales (respectivement deux rainures). sur ladite partie principale et un dispositif de verrouillage en butée et lesdits moyens électriques consistent en plusieurs plots de connexion disposés en regard sur le sous-ensemble et dans ladite partie principale qui entrent en contact élastique lors de l'arrivée en butée du sous-ensemble contre la partie principale, en première position clavier-en-place ou en deuxième position volet-en-place.

4. Combiné de téléphone mobile selon la revendication 1 ou 2, caractérisé en ce que lesdits moyens mécaniques consistent en quatre tourillons disposés aux quatre coins dudit sous-ensemble, et, sur la partie principale, en deux gorges destinées à recevoir deux par deux lesdits tourillons par deux accès hauts prévus à cet effet à une de leurs extrémités et comportant deux butées pour lesdits tourillons à leur autre extrémité et que lesdits moyens électriques consistent, dans la partie principale, en plusieurs plots de connexion disposés entre lesdites butées et, sur le sous-ensemble, en des pistes conductrices correspondantes disposées autour des deux bords arrondis latétaux qui relient deux par deux lesdits tourillons parallèlement à leur axe de rotation.

5. Combiné de téléphone mobile selon la revendication 4, caractérisé en ce qu'au voisinage desdites butées lesdites gorges comportent un premier étranglement conçu pour constituer un premier point dur pour le passage desdits tourillons juste avant leur arrivée contre lesdites butées.

6. Combiné de téléphone mobile selon la revendication 5 dans lequel le dispositif d'affichage se situe, en position volet-en-place derrière le sous-ensemble qui le cache et le protège, dans cette deuxième position, caractérisé en ce que ladite partie principale comporte un bord incliné reliant lesdites butées pour supporter selon un angle ledit sous-ensemble dans ladite première position de clavier-en-place qui est obtenue par pivotement dudit sous-ensemble à partir de la deuxième position de volet-en-place.

7. Combiné de téléphone mobile selon les revendications 5 et 6 prises ensemble, caractérisé en ce que lesdites butées sont constituées chacune par un deuxième étranglement desdites gorges qui débouche, chacun, sur un deuxième accès bas pour ledits tourillons.

8. Combiné de téléphone mobile selon l'une des revendications 4 à 7, caractérisé en ce que les largeurs et/ou profondeurs desdites gorges et celles, adaptées, desdits tourillons qui doivent, deux par deux, coopérer avec ces gorges ont des tailles différentes de façon à créer un effet dit de détrompeur lors de la solidarisation du sous-ensemble avec la partie principale.

9. Combiné de téléphone mobile selon l'une des revendications 4 à 8, caractérisé en ce que relativement auxdits accès hauts aux deux gorges, l'un comporte une porte d'entrée-sortie à deux battants ouvrant élastiquement dans les deux sens sous la poussée d'un tourillon, et l'autre accès haut une échancrure pratiquée dans le bord latéral correspondant de la partie principale et dans laquelle ledit autre accès débouche.

10. Combiné de téléphone mobile selon l'une des revendications 4 à 8, caractérisé en ce que le bord intérieur haut qui sépare lesdits accès hauts aux deux gorges présente une forme légèrement concave vers le haut.

11. Sous-ensemble pour combiné téléphonique mobile selon l'une des revendications précédentes.
